# EUROPÄISCHE PATENTSCHRIFT

(11) **EP 2 589 551 B1**
(45) Veröffentlichungstag und Bekanntmachung des Hinweises auf die Patenterteilung: **10.09.2014**
(21) Anmeldenummer: 12190805.7
(22) Anmeldetag: 31.10.2012
(51) Int. Cl.: B65G 11/18, B67B 1/00, B67B 3/06, B65B 7/28

(54) **Transportsystem für Behälterverschlüsse**
Transport system for container closures
Système de transport pour fermetures de récipients

(30) Priorität: 02.11.2011 DE 102011085581
(43) Veröffentlichungstag der Anmeldung: 08.05.2013
(73) Patentinhaber: Krones AG, 93073 Neutraubling (DE)
(72) Erfinder: Plank, Thomas, 93073 Neutraubling (DE); Strohhofer, Josef, 93073 Neutraubling (DE)
(74) Vertreter: Grünecker, Kinkeldey, Stockmair & Schwanhäusser

(56) Entgegenhaltungen:
- EP-A1- 2 221 251
- DE-A1-102009 009 440
- US-A1- 2011 017 568

## Beschreibung

Die Erfindung betrifft ein Transportsystem für Behälterverschlüsse mit den Merkmalen des Oberbegriffs von Patentanspruch 1.

In derartigen Vorrichtungen werden üblicherweise Behälterverschlüsse in einer Rinne transportiert. Beispielsweise werden mit einer derartigen Vorrichtung Behälterverschlüsse aus einem Vorrat zu einem Verschließer transportiert. Die Rinne wird dabei aus Rinnensegmenten gebildet, die zusammen einen Transportkanal bilden, in dem die Behälterverschlüsse geführt werden. Jedes Rinnensegment ist dabei mit mehreren parallel ausgerichteten Führungsschienen ausgebildet. Dabei ist die Rinne derart geneigt, dass die Behälterverschlüsse durch ihre eigene Schwerkraft entlang der Führungsschienen rutschen. Die Führungsschienen werden üblicherweise an den Enden zueinander über Halteelemente fixiert, die zusätzlich dazu dienen, die Rinnensegmente miteinander zu verbinden. Ein derartiges Halteelement ist somit als Flansch ausgebildet und dient als Verbindungselement zu einem nächsten Rinnensegment. Die Halteelemente selbst weisen eine Öffnung entsprechend dem Querschnitt des Transportkanals auf, um die herum die Führungsschienen an dem Halteelement angebracht sind. Dabei werden üblicherweise in dem Halteelement Bohrungen eingebracht, in die die Führungsschienen hineingesteckt und einseitig verschweißt werden.

Derartige Transportsysteme für Behälterverschlüsse haben zum Nachteil, dass Produktreste und Mikroorganismen zwischen zwei Halteelemente an der Verbindung von zwei Rinnensegmenten eindringen, und somit eine Mikroorganismus-Flora bilden können. Diese Bereiche können zudem beim Reinigen schlecht erreicht werden. Dadurch kann es beim Transport zu einer Rekontamination von sterilen Behälterverschlüssen kommen. Ebenso kann es an den Kontaktstellen zwischen den Führungsschienen und den Halteelementen zu einer Verschmutzung kommen, da hier die Führungsschienen konstruktionsbedingt nicht spaltfrei mit den Halteelementen verschweißt werden können. Zusätzlich haben derartige Transportsysteme konstruktionsbedingt zum Nachteil, dass sich beim Verschweißen die Führungsschienen wärmebedingt verziehen und diese später zeitaufwendig ausgerichtet werden müssen.

Aufgabe der Erfindung ist es, ein Transportsystem für Behälterverschlüsse bereitzustellen, an dem sich Produktreste und Mikroorganismen schwerer festsetzen können und bei dem der Aufwand für das Ausrichten von Führungsschienen vermindert wird.

Die Erfindung löst diese Aufgabe bei einem Transportsystem für Behälterverschlüsse mit den Merkmalen des Oberbegriffs des Anspruchs 1, mit den Merkmalen des kennzeichnenden Teils, gemäß dem die Halteelemente vom Ende der Führungsschienen beabstandet angeordnet sind und die Endabschnitte der Führungsschienen miteinander verbunden sind.

Dadurch, dass das erfindungsgemäße Transportsystem für Behälterverschlüsse gegenüber dem Stand der Technik über Halteelemente verfügt, die vom Ende der Führungsschienen beabstandet angeordnet sind und die Endabschnitte der Führungsschienen miteinander verbunden sind, kommen die Halteelemente von zwei verbundenen Rinnensegmenten nicht mehr in direkten Kontakt. Damit werden zwischen zwei Halteelementen keine engen Spalten gebildet, in die Produktreste oder Mikroorganismen eindringen und sich festsetzen könnten. Zudem sind alle Flächen der Haltesegmente frei zugänglich und können problemlos gereinigt werden. Da die Endabschnitte der Führungsschienen miteinander verbunden sind, bilden diese kleinst mögliche Kontaktflächen zueinander aus, die mit einem geringen Aufwand abgedichtet werden können. Dadurch, dass diese Kontaktflächen kleiner ausgebildet werden können, kann sich lediglich eine kleinere Menge an Verunreinigungen an den Kontaktflächen festsetzen.

Das erfindungsgemäße Transportsystem für Behälterverschlüsse ist grundsätzlich breit verwendbar. Es kann für Behälterverschlüsse für die verschiedensten Behälter, wie z.B. Glas- und Kunststoffflaschen, Tuben, Dosen und Kanister verwendet werden. Die Behälter können geeignet sein, verschiedenste Medien wie z.B. Getränke, Pasten, chemische, biologische und/oder pharmazeutische Produkte aufzunehmen. Bei den Behälterverschlüssen kann es sich um Schraubverschlüsse, Schraubdeckel, Korken und/oder Kronkorken handeln. Die Transportvorrichtung kann in einer Getränkeverarbeitungsanlage angeordnet sein. Das Transportsystem für Behälterverschlüsse kann dazu geeignet sein, Behälterverschlüsse von einer ersten Maschineneinheit zu einer zweiten Maschineneinheit zu transportieren, insbesondere von einem Vorrat zu einem Verschließer. Dabei kann der Vorrat auch besonders bevorzugt als Behälterverschlussbehandlungseinrichtung, insbesondere als Behälterverschlussdesinfektionseinrichtung ausgeführt sein. Das Transportsystem kann so ausgeführt sein, dass die Behälterverschlüsse darin durch ihre eigene Schwerkraft rutschen. Insbesondere kann das Transportsystem so ausgeführt sein, dass die Behälterverschlüsse mit einer vorherbestimmten Orientierung transportiert werden.

Die Führungsschienen können einen quadratischen, rechteckigen oder runden Querschnitt aufweisen. Die Führungsschienen können aus Kunststoff oder Metall, insbesondere aus Edelstahl, hergestellt sein. Die Rinnensegmente können aus mehreren zueinander parallel angeordneten Führungsschienen bestehen, die einen Führungskanal umschließen. Ein Rinnensegment kann mehrere Halteelemente aufweisen, wobei es sich insbesondere um zwei Halteelemente handeln kann. Die Halteelemente können mit den Führungsschienen fest verbunden sein und insbesondere verschweißt oder verklebt sein. Der Abstand der Halteelemente vom Ende der Führungsschienen kann in einem Bereich von 5 mm bis 200 mm oder insbesondere von 50 mm bis 100 mm sein. Es können an den Endabschnitten alle Führungsschienen miteinander verbunden sein oder eine Teilmenge der Führungsschienen. Insbesondere können mindestens drei Führungsschienen eines Rinnensegments mit mindestens drei Führungsschienen eines anderen Rinnensegments verbunden sein.

Die Halteelemente können jeweils einen Durchbruch aufweisen, der die Führungsschienen umschließt und dessen Rand einen Abstand zu den Führungsschienen aufweist. Der Abstand des Randes zu den Behälterverschlüssen kann in einem Bereich von 1 mm bis 50 mm liegen, insbesondere in einem Bereich von 1 mm bis 10 mm. Der Durchbruch kann so ausgeführt sein, dass er größer ist als der Kanal, der durch die Führungsschienen gebildet wird. Insbesondere kann der Durchbruch so ausgeführt werden, dass der Rand des Durchbruchs einen Abstand zu den Behälterverschlüssen bildet. Der Rand des Durchbruchs kann einen Abstand zu den Führungsschienen in einem Bereich von 1 mm bis 50 mm aufweisen, insbesondere in einem Bereich von 1 mm bis 5 mm.

Dadurch, dass die Haltesegmente einen Durchbruch aufweisen, der die Führungsschienen umschließt und dessen Rand einen Abstand zu den Führungsschienen aufweist, können Verschmutzungen im Bereich zwischen dem Halteelement und den Führungsschienen schwerer anhaften und sind insbesondere zugänglich für die Reinigung des Transportsystems. Dadurch, dass der Rand des Durchbruchs einen Abstand zu den Behälterverschlüssen aufweist, können diese ungehindert im Bereich des Halteelements beim Transport durchrutschen. Somit kann es zu keinem Stau in diesem Bereich kommen.

Die Führungsschienen können quer zur Rinne Fortsätze aufweisen, über die die Halteelemente mit den Führungsschienen verbunden sind. Die Fortsätze können mit den Halteelementen verklebt oder verschweißt sein. Insbesondere können die Enden der Fortsätze in Öffnungen der Halteelemente hineinragen und in diesem Bereich eine Verklebung oder eine Schweißnaht aufweisen. Durch die Fortsätze bildet sich ein größerer Bereich für den Wärmeübergang beim Schweißen zwischen den Führungsschienen und den Halteelementen aus. Dadurch wird beim Schweißen der Verzug der Führungsschienen vermindert und somit müssen die Führungsschienen nicht mehr aufwendig ausgerichtet werden.

Die Endabschnitte der Führungsschienen können so ausgeführt sein, dass die den Rinnenquerschnitt begrenzenden Flächen gleich bleiben. Die den Rinnenquerschnitt begrenzenden Flächen können durch die Kontaktbereiche der Führungsschienen mit den durchrutschenden Behälterverschlüssen gebildet werden. Die Endabschnitte der Führungsschienen können dabei so ausgebildet sein, dass die den Rinnenquerschnitt begrenzenden Flächen stetig ineinander übergehen. Insbesondere können die den Rinnenquerschnitt begrenzenden Flächen ohne Krümmungswechsel ausgeführt sein. Durch diese Ausführung der Endabschnitte der Führungsschienen können die Behälterverschlüsse in der Rinne ungehindert transportiert werden.

Die Endabschnitte der Führungsschienen können lösbar miteinander verbunden sein. Dadurch können die Rinnensegmente modular ausgeführt sein und somit für verschiedene Konfigurationen des Transportsystems eingesetzt werden.

Die Endabschnitte der Führungsschienen können als Kupplungsstellen ausgebildet sein. Die Kupplungsstellen können so ausgeführt sein, dass sie zwei Kupplungshälften aufweisen, die insbesondere an den Endabschnitten der Führungsschienen angeordnet sind. Die Kupplungshälften können lösbar miteinander verbindbar und/oder nach dem Einrichten fixierbar sein. Die Kupplungsstellen können so ausgeführt sein, dass die Führungsschienen ineinandersteckbar sind. Durch die Ausführungen der Endabschnitte der Führungsschienen als Kupplungsstellen kann das Transportsystem flexibler eingesetzt werden.

Die Kupplungsstellen können mit Ösen ausgebildet sein. Insbesondere kann zumindest eine der Kupplungshälften als Öse ausgeführt sein und insbesondere mit einer Schraube oder einem Stift verbindbar sein. Durch die Ausführung der Kupplungsstellen als Ösen ist die Fertigung der Führungsschienen besonders einfach.

Die Kupplungsstellen können Dichtelemente aufweisen, die insbesondere mit einer Polymerbeschichtung ausgeführt sind. Die Dichtelemente können insbesondere als Dichtscheiben ausgeführt sein, die insbesondere zwischen den Kupplungshälften angeordnet sind. Die Dichtscheiben können zwischen einem Schraubenkopf und einer Öse und/oder einer Mutter und einer Öse im Bereich einer Kupplungsstelle angeordnet sein. Durch die Dichtelemente wird das Eindringen von Verschmutzungen in die Kupplungsstelle verhindert und somit können sich innerhalb der Kupplungsstellen keine Produktreste und/oder Mikroorganismen festsetzen, wobei dadurch insbesondere beste Verhältnisse für die Hygiene und die Reinigung geschaffen werden können.

Weitere Merkmale und Vorteile der Erfindung werden nachfolgend anhand der in den Figuren dargestellten Ausführungsbeispiele erläutert. Dabei zeigt:
- Fig. 1: eine Darstellung eines erfindungsgemäßen Transportsystems für Behälterverschlüsse in einer perspektivischen Ansicht;
- Fig. 2: eine Teildarstellung des Verbindungsbereichs von zwei Rinnensegmenten des in Fig. 1 dargestellten Transportsystems in einer perspektivischen Ansicht.

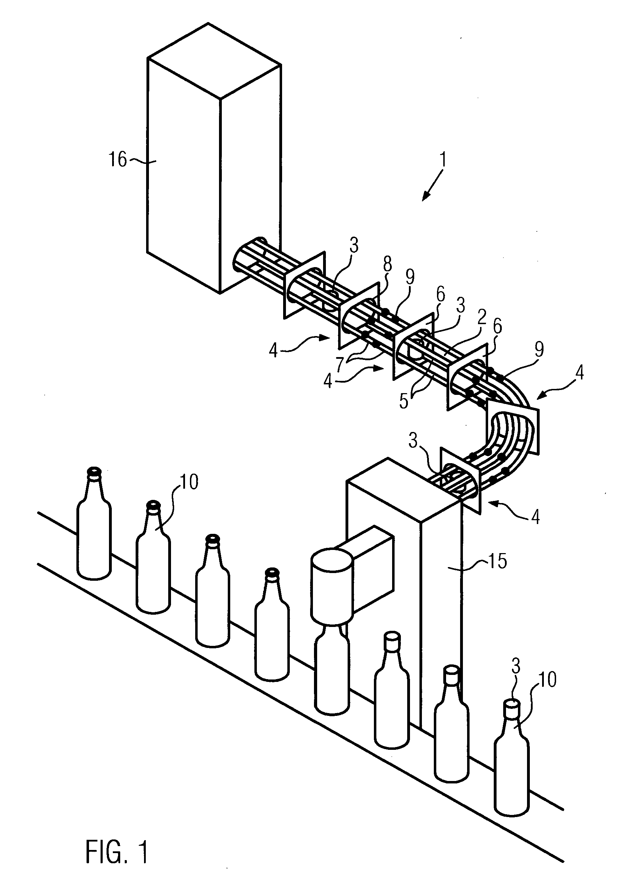

Fig. 1 zeigt eine Darstellung des Transportsystems 1 für Behälterverschlüsse 3 in einer perspektivischen Ansicht. Zu sehen ist ein Verschlussvorrat 16, von dem Behälterverschlüsse 3 über das Transportsystem 1 zu einem Verschließer 15 transportiert werden. Der Verschließer 15 in Fig. 1 ist hier als Einzelverschließstation ausgeführt. Besonders bevorzugt ist der Verschließer 15 jedoch ein kontinuierlich arbeitendes Verschließerkarussell mit einer Vielzahl von Verschließstationen, die in gleichmäßigem Abstand voneinander auf dem Umkreis des Verschließerkarussells angeordnet sind. Gerade die störungsfreie Zuführung von Behälterverschlüssen 3 führt zu einer hohen Eignung des Transportsystems 1 für eine kontinuierliche Zuführung. Durch den Verschließer 15 werden die Behälter 10 mit den Verschlüssen 3 verschlossen. Dabei sind die Behälter 10 als Flaschen ausgebildet und die Behälterverschlüsse 3 als Schraubverschlüsse. Das Transportsystem 1 bildet dabei eine Rinne 2, in der die Verschlüsse 3 entlang von Führungsschienen 5 mittels ihrer eigenen Gewichtskraft rutschen. Die Rinne 2 wird dabei von mehreren Rinnensegmenten 4 gebildet, wobei die Behälterverschlüsse 3 nach dem Austritt aus dem Verschlussvorrat 16 zunächst entlang von zwei geraden Rinnensegmenten 4 rutschen und dann durch ein gekrümmtes Rinnensegment 4 entlang einer Kurve über ein weiteres gerades Rinnensegment 4 in den Verschließer 15 gelangen.

Die beiden ersten geraden Rinnensegmente 4 sind dabei in Fig. 1 mit jeweils sechs Führungsschienen 5 ausgeführt, die mit zwei Halteelementen 6 verschweißt sind. Die Halteelemente weisen dabei einen Durchbruch 8 auf, der die Führungsschienen 5 umschließt und somit eine Öffnung aufweist, durch die die Behälterverschlüsse 3 ungehindert hindurch rutschen können. Die Endabschnitte 7 sind dabei als Kupplungsstellen 9 ausgebildet, an denen jeweils zwei Führungsschienen 5 miteinander verbunden sind. Die Halteelemente 6 sowie die Führungsschienen 5 sind dabei mit einem Laserschnittverfahren aus einem Blech herausgeschnitten. Somit weisen die Führungsschienen 5 einen rechteckigen Querschnitt auf.

Durch die Rinnensegmente 4 wird somit in Fig. 1 eine käfigartige Rinne 2 gebildet, in der die Behälterverschlüsse 3 in einer vorherbestimmten Orientierung entlang rutschen. Somit ist gewährleistet, dass die Behälterverschlüsse 3 in der gewünschten Orientierung in den Verschlie-βer 15 gelangen, um dort weiter verarbeitet zu werden.

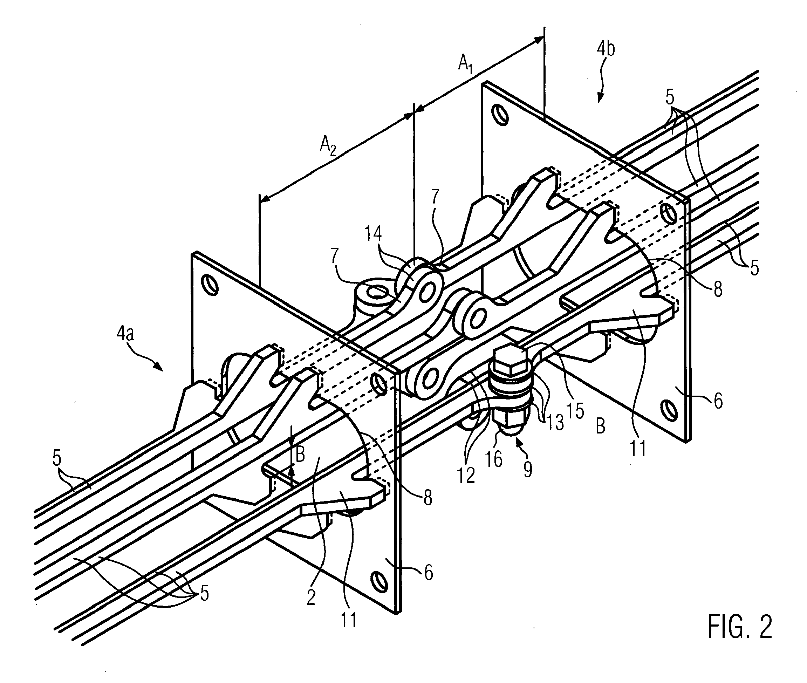

Fig. 2 ist eine Teildarstellung von Fig. 1 und zeigt den Verbindungsbereich von zwei Rinnensegmenten 4a und 4b in einer perspektivischen Ansicht.

Zu sehen sind die Endbereiche von zwei Rinnensegmenten 4a und 4b, wobei jedes Rinnensegment 4a, 4b über sechs Führungsschienen 5 verfügt, die über zwei Halteelemente 6 zueinander fixiert sind, die vom Ende der Führungsschienen 5 mit dem Abstand A₁ bzw. A₂ beabstandet sind. Somit weisen die beiden Haltelemente 6 einen Abstand A₁ + A₂ zueinander auf und sind von allen Seiten für eine Reinigung zugänglich. Dadurch können sich in diesem Zwischenraum keine Produktreste und/oder Mikroorganismen festsetzen. Die Halteelemente 6 sind in dem Ausführungsbeispiel über die Fortsätze 11 mit den Führungsschienen 5 verbunden. Die Fortsätze 11 sind dabei jeweils mit den Enden in eine entsprechende Öffnung des Halteelements 6 hineingefügt und verschweißt. Somit bilden die Fortsätze einen längeren Wärmeübergang zu den Führungsschienen 5, wodurch sich diese beim Verschweißen der Fortsätze 11 mit dem Halteelement 6 nur in einem geringen Maß verziehen und nicht nachträglich ausgerichtet werden müssen. Die Führungsschienen 5 sind durch den Durchbruch 8 des Halteelements 6 geführt, welcher im Querschnitt größer ausgeführt ist als die Führungsschienen 5 und somit umschließt der Durchbruch 8 die Führungsschienen 5. Der Abstand des Durchbruchs 8 weist einen Abstand B zu den Führungsschienen 5 auf, wodurch sich in diesem Bereich keine Verschmutzung oder Mikroorganismen ablagern können und dieser Bereich bei einer Reinigung erreicht werden kann.

Die Endabschnitte 7 der Führungsschienen 5 sind in dem Ausführungsbeispiel in Fig. 2 als Kupplungsstellen 9 ausgeführt, wobei die beiden Kupplungshälften als Ösen 14 ausgebildet sind. Die Kupplungsstellen 9 umfassen dabei jeweils eine Schraube 15, welche durch die beiden Ösen 14 hindurchgeführt ist, und mit der Mutter 16 verschraubt wird. Die Endabschnitte 7 der Führungsschienen 5 sind somit lösbar miteinander verbunden. Dadurch, dass die Kupplungsstellen 9 mit kleinst möglichen Kontaktflächen ausgeführt sind, bieten sie einen entsprechend kleinen Bereich für die Ablagerung von Verschmutzungen und lassen sich zudem besonders leicht abdichten. Die Kupplungsstellen 9 sind dabei mit polymerbeschichteten Dichtelementen 13 ausgeführt, die den Innenbereich der Kupplungsstellen 9 abdichten und somit das Eindringen von Produktresten und Mikroorganismen in das Innere der Kupplungsstellen 9 verhindern.

Die Endabschnitte 7 der Führungsschienen 5 sind so ausgeführt, dass die Führungsflächen 12 im Bereich der Endabschnitte 7 stetig ineinander übergehen und somit die den Rinnenquerschnitt begrenzenden Flächen gleich bleiben. Somit ist gewährleistet, dass die Behälterverschlüsse 3 innerhalb der Rinne 2 in ihrer Rutschbewegung nicht behindert werden.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind.

## Patentansprüche

1. Transportsystem (1) für Behälterverschlüsse (3) mit mindestens einer Rinne (2), in der die Behälterverschlüsse (3) transportiert werden und die aus Rinnensegmenten (4) mit Führungsschienen (5) gebildet wird, wobei die Führungsschienen (5) über Halteelemente (6) zueinander fixiert sind,
**dadurch gekennzeichnet, dass**
die Halteelemente (6) vom Ende der Führungsschienen (5) beabstandet angeordnet sind und die Endabschnitte (7) der Führungsschienen (5) miteinander verbunden sind.

2. Transportsystem (1) für Behälterverschlüsse (3) nach Anspruch 1, wobei die Halteelemente (6) jeweils einen Durchbruch (8) aufweisen, der die Führungsschienen (5) umschließt und dessen Rand einen Abstand (B) zu den Führungsschienen (5) aufweist.

3. Transportsystem (1) für Behälterverschlüsse (3) nach einem der Ansprüche 2 oder 3, wobei die Führungsschienen (5) quer zur Rinne (2) Fortsätze (11) aufweisen, über die die Halteelemente (6) mit den Führungsschienen (5) verbunden sind.

4. Transportsystem (1) für Behälterverschlüsse (3) nach einem der vorangegangenen Ansprüche, wobei die Endabschnitte (7) der Führungsschienen (5) so ausgeführt sind, dass die den Rinnenquerschnitt begrenzenden Flächen gleich bleiben.

5. Transportsystem (1) für Behälterverschlüsse (3) nach einem der vorangegangenen Ansprüche, wobei die Endabschnitte (7) der Führungsschienen (5) lösbar miteinander verbunden sind.

6. Transportsystem (1) für Behälterverschlüsse (3) nach einem der vorangegangenen Ansprüche, wobei die Endabschnitte (7) der Führungsschienen (5) als Kupplungsstellen (9) ausgebildet sind.

7. Transportsystem (1) für Behälterverschlüsse (3) nach Anspruch 6, wobei die Kupplungsstellen (9) mit Ösen (14) ausgebildet sind.

8. Transportsystem (1) für Behälterverschlüsse (3) nach Anspruch 6 oder 7, wobei die Kupplungsstellen (9) Dichtelemente (13) aufweisen, die insbesondere mit einer Polymerbeschichtung ausgeführt sind.

## Claims

1. Transport system (1) for container closures (3) with at least one channel (2) in which the container closures (3) are transported and which is composed of channel segments (4) with guide rails (5), wherein the guide rails (5) are secured together by retainer elements (6),
**characterised in that**
the retainer elements (6) are arranged in such a way that they are spaced from the end of the guide rails (5) and the end portions (7) of the guide rails (5) are connected to one another.

2. Transport system (1) for container closures (3) according to claim 1, wherein the retainer elements (6) each feature an opening (8) which encloses the guide rails (5) and the rim of which features a gap (B) from the guide rails (5).

3. Transport system (1) for container closures (3) according to one of the claims 1 or 2, wherein the guide rails (5) transverse to the channel (2) feature extensions (11) by which the retainer elements (6) are connected to the guide rails (5).

4. Transport system (1) for container closures (3) according to one of the preceding claims, wherein the end portions (7) of the guide rails (5) are implemented in such a way that the surfaces limiting the channel cross-section remain equal.

5. Transport system (1) for container closures (3) according to one of the preceding claims, wherein the end portions (7) of the guide rails (5) are connected to one another in a detachable fashion.

6. Transport system (1) for container closures (3) according to one of the preceding claims, wherein the end portions (7) of the guide rails (5) are configured as coupling locations (9).

7. Transport system (1) for container closures (3) according to claim 6, wherein the coupling locations (9) are configured with eyelets (14).

8. Transport system (1) for container closures (3) according to claim 6 or 7, wherein the coupling locations (9) feature sealing elements (13) which are notably implemented with a polymer coating.

## Revendications

1. Système de transport (1) pour fermetures (3) de contenants ou récipients, comprenant au moins une goulotte (2) dans laquelle sont transportées les fermetures (3) de contenants, et qui est constituée de segments de goulotte (4) comportant des glissières de guidage (5), les glissières de guidage (5) étant fixées les unes relativement aux autres par l'intermédiaire d'éléments de maintien (6),
**caractérisé en ce que**
les éléments de maintien (6) sont agencés à distance de l'extrémité des glissières de guidage (5), et les tronçons d'extrémité (7) des glissières de guidage (5) sont reliés les uns aux autres.

2. Système de transport (1) pour fermetures (3) de contenants, selon la revendication 1, dans lequel les éléments de maintien (6) présentent chacun une ouverture de passage (8), qui entoure les glissières de guidage (5) et dont le bord présente une distance d'espacement (B) aux glissières de guidage (5).

3. Système de transport (1) pour fermetures (3) de contenants, selon l'une des revendications 1 ou 2, dans lequel les glissières de guidage (5) présentent, transversalement à la goulotte (2), des prolongements (11) par l'intermédiaire desquels les éléments de maintien (6) sont reliés aux glissières de guidage (5).

4. Système de transport (1) pour fermetures (3) de contenants, selon l'une des revendications précédentes, dans lequel les tronçons d'extrémité (7) des glissières de guidage (5) sont d'une réalisation telle que les surfaces délimitant la section transversale de goulotte, restent identiques.

5. Système de transport (1) pour fermetures (3) de contenants, selon l'une des revendications précédentes, dans lequel les tronçons d'extrémité (7) des glissières de guidage (5) sont reliés mutuellement de manière démontable.

6. Système de transport (1) pour fermetures (3) de contenants, selon l'une des revendications précédentes, dans lequel les tronçons d'extrémité (7) des glissières de guidage (5) sont réalisés en tant que zones de couplage (9).

7. Système de transport (1) pour fermetures (3) de contenants, selon la revendication 6, dans lequel les zones de couplage (9) sont conçues avec des oeillets de fixation (14) .

8. Système de transport (1) pour fermetures (3) de contenants, selon la revendication 6 ou la revendication 7, dans lequel les zones de couplage (9) présentent des éléments d'étanchéité (13), qui sont notamment réalisés avec un revêtement de polymère.
